# EUROPÄISCHE PATENTSCHRIFT

(11) **EP 3 098 565 B1**
(45) Veröffentlichungstag und Bekanntmachung des Hinweises auf die Patenterteilung: **05.05.2021**
(21) Anmeldenummer: 16170410.1
(22) Anmeldetag: 19.05.2016
(51) Int. Cl.: G01C 15/00, G08C 17/00

(54) **VERFAHREN ZUM BEDIENEN EINES BAULASERS**
METHOD FOR OPERATING A CONSTRUCTION LASER
PROCEDE DE COMMANDE D'UN LASER DE CHANTIER

(30) Priorität: 21.05.2015 DE 102015108084
(43) Veröffentlichungstag der Anmeldung: 30.11.2016
(73) Patentinhaber: Stabila Messgeräte Gustav Ullrich GmbH, 76855 Annweiler (DE)
(72) Erfinder: WEBER, Andreas, 76848 Wilgartswiesen (DE)
(74) Vertreter: Stoffregen, Hans-Herbert

(56) Entgegenhaltungen:
- WO-A1-2013/020845
- DE-A1-102010 011 473
- US-A1- 2004 218 104
- US-A1- 2015 092 183

## Beschreibung

Die Erfindung bezieht sich auf ein Verfahren zum Bedienen eines Baulasers in Form eines Linienlasers oder eines einen Laserkopf aufweisenden Rotationslaser mittels einer Fernbedieneinheit, die mehrere Eingabefelder zur Auslösung von Aktionen des Baulasers aufweist, wobei die Fernbedieneinheit zumindest einen Sensor zur Bestimmung einer Änderung eines Parameters der Fernbedieneinheit enthält und die Änderung des Parameters eine durch ein Eingabefeld ausgelöste Aktion zumindest beeinflusst.

Ein Rotationslaser ist ein Gerät, das zur Ermittlung bzw. Überprüfung von insbesondere waagerechten Höhenverläufen, Linien und Lotpunkten bestimmt ist. Hierzu wird ein rotierender Laserstrahl benutzt, der eine Bezugsebene bildet. Dabei kann an zu vermessenden Punkten eine sichtbare Reflexion erzeugt werden oder der Laserstrahl mittels einer Empfangseinheit detektiert werden. Üblicherweise wird ein entsprechender Rotationslaser an einem Referenzort aufgestellt, um sodann den gewünschten Betriebsmodus durchzuführen. Hierzu können u. a. gehören
- Ermittlung einer Bezugslinie, die durch die von dem rotierenden Laserstrahl aufgespannten Ebene durch Abbildung auf Begrenzungsflächen gebildet wird,
- Scanmodus, in dem der Laserstrahl über einen gewünschten Winkelbereich hin und her bewegt wird,
- Sektionsmodus, in dem bei rotierendem Laserkopf nur über einen vorgegebenen Winkelbereich Laserstrahlung erfassbar ist,
- Punktmodus, bei dem bei ruhendem Laserkopf in einer gewünschte Richtung auf eine Begrenzung ein Laserpunkt abgebildet werden soll,
- die Möglichkeit, die von dem rotierenden Laserkopf emittierte Strahlung und die hierdurch erzeugte Linie zur Horizontalen bzw. Vertikalen unter einem gewünschten Winkel auszurichten.

Üblicherweise wird die Einstellung des gewünschten Modus - auch Aktion genannt - am Gerät selbst vorgenommen, wodurch der Nachteil entstehen kann, dass das Gerät unbeabsichtigt verrückt wird. Auch befindet sich der Nutzer häufig nicht unmittelbar im Bereich des Rotationslasers, so dass sich der Nutzer zwischen dem tatsächlichen Aufenthaltsort und dem des Rotationslasers hin und her bewegen muss.

Um diese Nachteile zu vermeiden, sind Lasergeräte mit Fernbedienungen bekannt, über die ein gewünschter Betriebsmodus einstellbar ist. Entsprechende Bedienungen sind jedoch von der Handhabung her aufwendig und bieten nicht den gewünschten Komfort.

Der DE 10 2012 112 834 A1 ist ein aus Rotationslaser und Fernbedieneinheit bestehendes System zu entnehmen. Sinn der Fernbedieneinheit ist es, dass der Rotationslaser ausschließlich mit dieser bedient werden kann, so dass ein Diebstahlschutz erreicht wird. Der Rotationslaser weist des Weiteren einen Beschleunigungssensor auf, um eine Beschleunigung des Rotationslasers zu erkennen und somit ggfs. Rückschlüsse auf ein unzulässiges Entfernen ziehen zu können. Zum Bedienen ist es des Weiteren grundsätzlich erforderlich, dass das Bedienfeld optisch erfasst wird.

Um die Funktionalität zur Änderung der Ausrichtung eines Rotationslaser zu verbessern, wird nach der WO 2013/020845 A1 eine Fernbedieneinheit verwendet, deren Ausmaß an Ausrichtung bzw. Ausrichtungsänderungsgeschwindigkeit auf Ausmaß an Ausrichtung bzw. Geschwindigkeit des Vermessungsgeräts proportional übertragen wird. Hierdurch soll die Möglichkeit geschaffen werden, zunächst eine Grobausrichtung und sodann eine Feinausrichtung auf ein Ziel vorzunehmen.

Die JP 2013-156 124 A und JP 2004-108 939 A beziehen sich auf Fernsteuerungen von Messgeräten.

Der DE 10 2010 011 473 A1 und der US 2004/0218104 A1 sind Fernbedienungen zu entnehmen, die für die Konsumelektronik bzw. Multimediazentren bestimmt sind. Dabei werden Aktionen durch die Fernbedienung dann ausgelöst, wenn eine Bewegung einen Schwellwert überschritten hat.

Der vorliegenden Erfindung liegt die Aufgabe zu Grunde, ein Verfahren der eingangs genannten Art so weiterzubilden, dass eine dem Grunde nach intuitive Bedienung ermöglicht wird. Gleichzeitig soll sichergestellt werden, dass Bewegungen in der Fernbedieneinheit gezielt, also nicht unbeabsichtigt, an den Baulaser wie Rotationslaser bzw. dessen Steuerung übertragen werden, um Fehlfunktionen zu vermeiden.

Zur Lösung der Aufgabe sieht die Erfindung im Wesentlichen vor, dass die Aktion nach Betätigen des der Aktion zugeordneten Eingabefeldes erst dann ausgelöst wird, wenn das Ausmaß der Änderung des zumindest einen Parameters der Fernbedieneinheit einen Schwellwert zumindest erreicht und nach Erreichen des Schwellwerts in Abhängigkeit des Ausmaßes der Änderung des Parameters das Ausmaß der zumindest einen Aktion proportional verändert wird, wobei zumindest eine Aktion aus der Gruppe durchgeführt wird:
Scanmodus, wobei zur Auslösung des Scanmodus durch Betätigen des diesem zugeordneten Eingabefelds zuvor eine Aktion durchgeführt wird, mittels derer eine außerhalb des Rotationslasers wahrzunehmende Emission der Laserstrahlung über einen vom Ausmaß der Veränderung des Parameters abhängigen Winkel erfolgt,

Rotationsgeschwindigkeit des Laserkopfs, wobei durch Betätigen des der Aktion Rotationsgeschwindigkeit des Laserkopfs zugeordneten Eingabefeldes und nach Erreichen des Schwellwertes die Geschwindigkeit des rotierenden Laserkopfs in Abhängigkeit vom Ausmaß der Änderung des Parameters verändert wird,

Punktmodus, wobei zur Auslösung des Punktmodus zunächst die die Rotationsgeschwindigkeit des Laserkopfs bestimmende Aktion derart durchgeführt wird, dass der Laserkopf stillsteht, und sodann durch Betätigen des dem Punktmodus zugeordneten Eingabefelds und nach Erreichen des Schwellwertes in Abhängigkeit vom Ausmaß der Veränderung des Parameters die Rotationsposition des Laserkopfes verändert wird,

Sektionsmodus, wobei zur Nutzung des Sektionsmodus, bei dem von außerhalb des Rotationslasers wahrnehmbarem emittierten Licht ein Winkelbereich ausgeblendet wird, das dem Sektionsmodus zugeordnete Eingabefeld betätigt wird und nach Erreichen des Schwellwertes in Abhängigkeit vom Ausmaß der Veränderung des Parameters das Ausmaß des ausgeblendeten Bereichs verändert wird,

Neigung von dem Laserstrahl aufgespannter Ebene.

Erfindungsgemäß wird durch Betätigen eines Bedienfeldes, bei dem es sich insbesondere um eine Taste, aber auch einen Bereich eines Touchscreens handeln kann, ausgewählt, welche Aktion durchzuführen ist. Durch Betätigen wird diese jedoch nicht sofort durchgeführt, sondern erst dann, wenn die Fernbedieneinheit - nachstehend kurz Fernbedienung genannt - gewollt Bewegungen ausgesetzt wird, wobei gleichzeitig das Bedienfeld weiterhin aktiviert sein muss. Dabei wird insbesondere eine gewollte Bewegung durch Drehen der die Fernbedienung haltenden Hand erzeugt, wobei bevorzugt ein Drehen der Fernbedienung bzw. deren Gehäuses um dessen Längsachse erfolgen kann.

Um ein ungewolltes Auslösen der Aktion zu vermeiden, muss des Weiteren die Fernbedienung gewollt um ein Ausmaß in ihrer Position - bei die Fernbedienung haltender Hand um ihre Achse gedreht - verändert werden, um einen Schwellwert, der von dem Ausmaß, also der Größe der Drehung abhängig ist, zu erreichen, der durch zumindest einen Sensor, insbesondere einen Neigungssensor, ermittelt wird. Bei weiterer Änderung des zu messenden von dem Sensor ermittelten Parameters, also z. B. Drehen und somit Neigen der Fernbedienung, insbesondere zur Horizontalen, wird sodann durch von der Fernbedienung an die Steuerung des Lasergeräts übertragene Signale das Ausmaß der Aktion bestimmt und nach Erreichen eines gewünschten Wertes sodann das Bedienfeld nicht mehr betätigt, so dass der erreichte Wert beibehalten bleibt.

In Abhängigkeit von der Änderungsrichtung des Parameters, also z. B. des Drehens der Fernbedienung im oder entgegen dem Uhrzeigersinn, wird z.B. bei der Aktion "Geschwindigkeitseinstellung" die Rotationsgeschwindigkeit erhöht bzw. reduziert werden, ausgehend von der Rotationsgeschwindigkeit, die der Laserkopf beim Einschalten des Gerätes aufweist. Somit kann intuitiv auf einfache Weise der Betriebsmodus des Lasergerätes eingestellt werden, wobei eine unkontrollierte Veränderung ausgeschlossen ist. Nach Erreichen des gewünschten Wertes und Loslassen des Bedienfeldes kann die Fernbedienung z. B. in eine Tasche gesteckt werden, ohne dass sich das Ausmaß der Aktion, also bei der Aktion "Geschwindigkeitseinstellung" die Rotationsgeschwindigkeit ändert.

Mit anderen Worten zeichnet sich die Erfindung insbesondere dadurch aus, dass nach Erreichen des gewünschten Ausmaßes der Aktion das Eingabefeld nicht mehr betätigt wird, wobei das durch das Ausmaß der Änderung des Parameters ausgelöste Ausmaß der Aktion beibehalten wird, insbesondere Rotationsgeschwindigkeit des Laserkopfes.

Die Erfindung zeichnet sich insbesondere auch dadurch aus, dass nach erfolgter Auslösung einer Aktion und erneuter Betätigung des der Aktion zugeordneten Bedienfeldes die Aktion in ihrem Ausmaß unmittelbar verändert wird, wenn sich die Fernbedieneinheit bereits in einer Position befindet, in der der Parameter den Schwellwert überschritten hat.

Insbesondere ist vorgesehen, dass als Ausgangspunkt sowohl für den Scanmodus als auch für den Sektionsmodus als auch für den Punktmodus stets ein gegenüber dem Bedienfeld liegender Bereich des Lasers gewählt wird, von dem ausgehend der Scanbereich bzw. der Sektionsmodus bzw. die Position des Bezugspunktes verändert wird. Andere Bezugspunkte können selbstverständlich auch gewählt werden.

Die quasi Null-Lage der Fernbedienung, von der aus die Veränderung des Parameters mittels des zumindest einen Sensors ermittelt wird, ist insbesondere die Ausrichtung der Fernbedienung auf das Lasergerät. Andere Bezugspunkte sind jedoch gleichfalls möglich.

Besonders vorteilhaft ist, dass aufgrund der erfindungsgemäßen Lehre im Vergleich zu sonstigen für Baulaser benutzten Fernbedienungen weniger Befehlstasten benötigt werden, da die Neigung bzw. Art der Neigung sonst erforderliche Befehlstasten ersetzt.

Zu dem Schwellwert ist anzumerken, dass es sich hierbei um einen Absolutwert handeln sollte, wobei insbesondere der Schwellwert durch Neigung der von der Fernbedieneinheit bzw. deren Gehäuse aufgespannten Ebene zum Erdschwerefeld festgelegt ist, wobei Ausgangspunkt Ausrichtung der Ebene zur Horizontalen sein sollte, also die Ebene in der Horizontalen oder etwa in der Horizontalen selbst. Dabei kann ein Neigungswinkel von z.B. 5° bis 10° ausgehend von der Horizontalen gewählt werden.

Zu dem in der Fernbedienung zu integrierenden Sensor bzw. zu den integrierenden Sensoren ist anzumerken, dass Beschleunigungssensoren nach unterschiedlichen Messprinzipien z.B. piezoresistiv, piezoelektrisch, kapazitiv, magnetoresistiv, thermodynamisch oder nach dem Halleffekt verwendet werden können. Dabei ist der Sensor bzw. sind die Sensoren bevorzugterweise als MEMS (Micro-electro-mechanical Systems) ausgeführt. Auch Lage- und Neigungssensoren wie z.B. elektronische Libellen oder andere Flüssigkeitssensoren und Neigungsschalter sind einsetzbar.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:

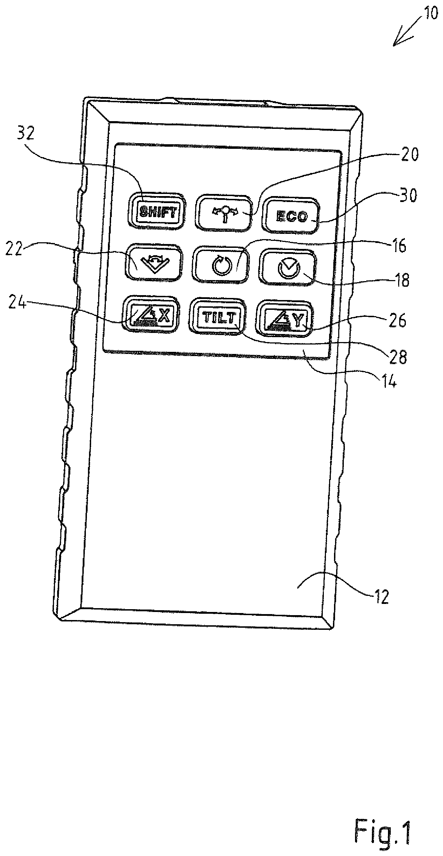

- Fig. 1: eine Fernbedienung in Draufsicht,

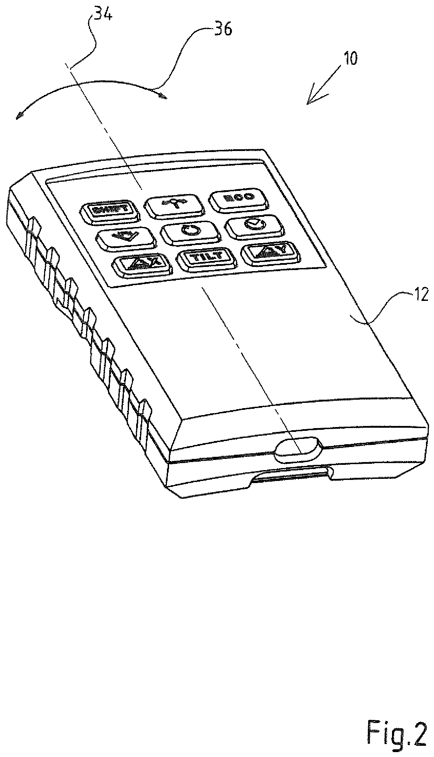

- Fig. 2: eine Fernbedienung in Nutzstellung,
- Fig. 3: ein Fließbild zur Verdeutlichung der Einstellung der Rotations-geschwindigkeit eines Laserkopfs eines Rotationslasers,
- Fig. 4: ein Fließbild zur Verdeutlichung eines Sektionsmodus,
- Fig. 5: ein Fließbild zur Verdeutlichung eines Maskenmodus,
- Fig. 6, 7: Fließbilder zur Verdeutlichung eines Scanmodus,
- Fig. 8, 9: Fließbilder zur Verdeutlichung der Einstellung des Neigungswinkels eines Rotationslasers,
- Fig. 10: ein Fließbild zur Verdeutlichung eines Punktmodus und
- Fig. 11: ein Rotationslaser.

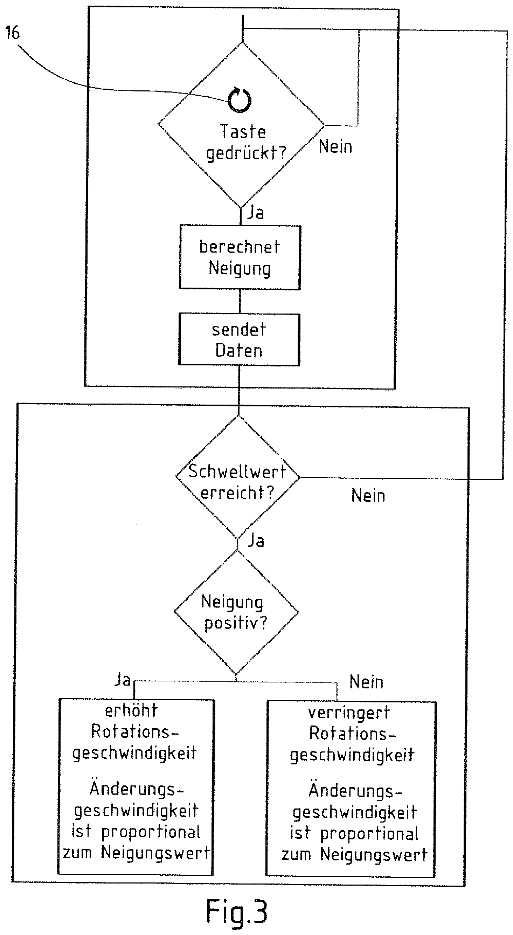

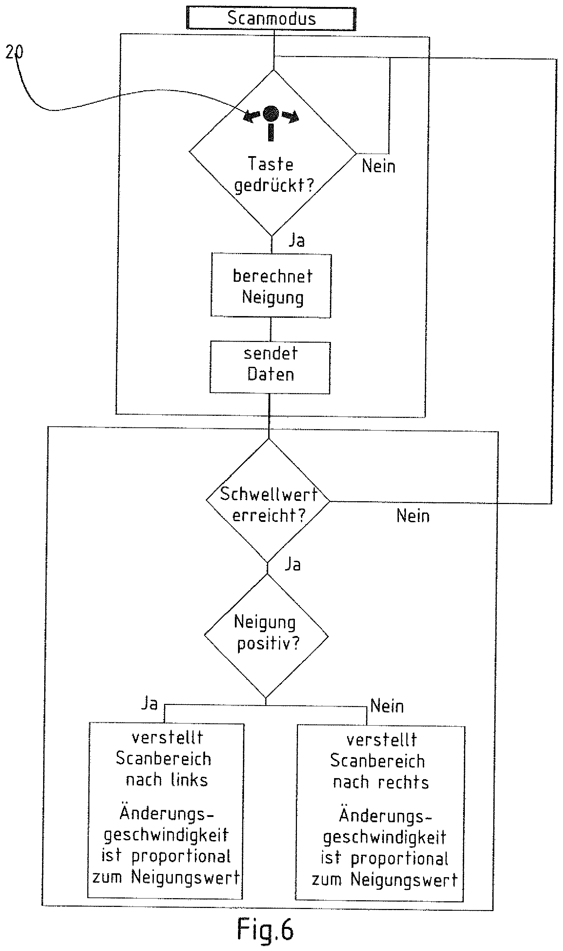

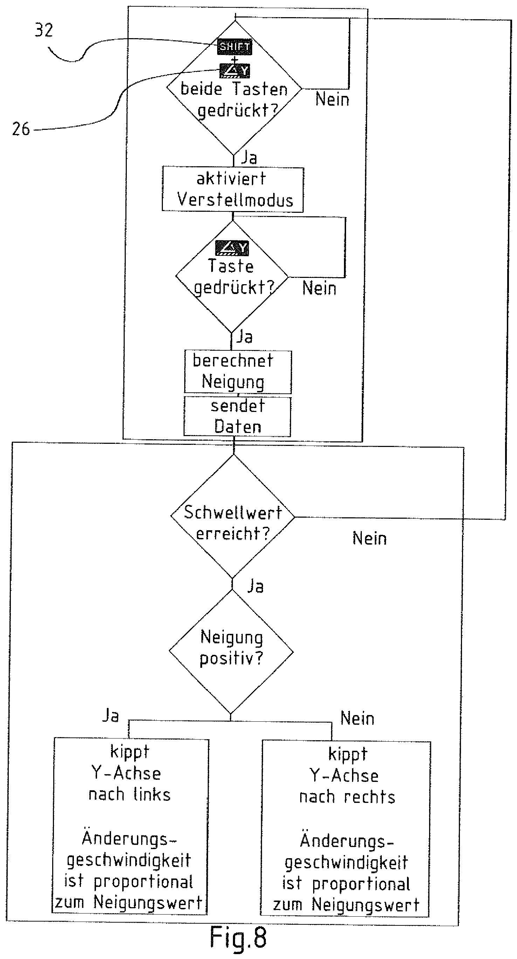

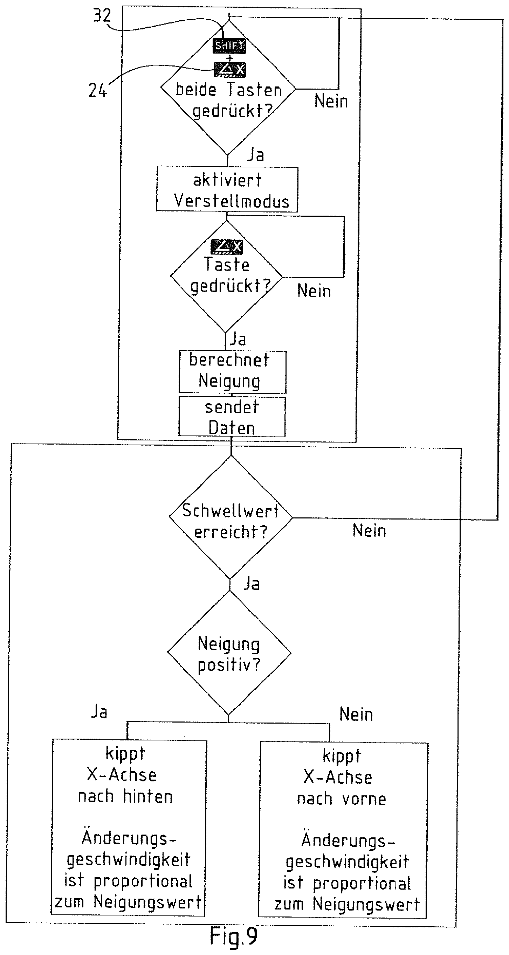

Anhand der Figuren, in denen grundsätzlich für gleiche Elemente die gleichen Bezugszeichen verwendet werden, soll die erfindungsgemäße Lehre zum Bedienen eines Rotationslasers 100 erläutert werden. Dabei sind insbesondere die Fig. 3 bis 10 selbsterklärend, die ohne nähere Beschreibung die Erfindung von selbst offenbaren.

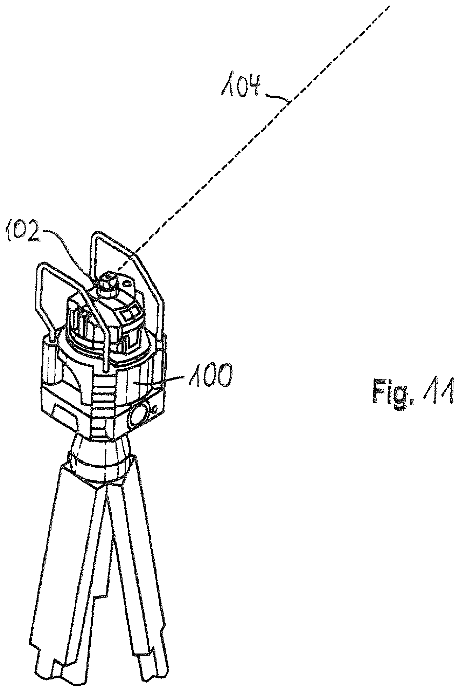

Der in Fig. 11 rein prinzipiell dargestellte Rotationslaser 100 weist einen Rotationslaserkopf 102 auf, von dem ein Laserstrahl 104 emittiert wird. Aufbau und Konstruktion eines entsprechenden Rotationslasers 100 entspricht dem Stand der Technik, so dass es weiterer Erläuterungen nicht bedarf.

Wird die Erfindung anhand eines Rotationslasers erläutert, so wird hierdurch die erfindungsgemäße Lehre nicht eingeschränkt. Vielmehr ist die erfindungsgemäße Lehre für jede Art von Laser bzw. Baulaser, insbesondere Linien- und Rotationslaser, nutzbar.

Zum Bedienen des Rotationslasers 100 wird eine Fernbedienung 10 benutzt, mit der gewünschte Aktionen bzw. Betriebsmodi des Rotationslasers 100 bzw. des in dem Rotationslaser 100 drehbar angeordneten Laser- oder Rotationskopfs 102, über den die Laserstrahlung 104 emittiert wird, einzustellen. Die Fernbedienung 10 weist ein Gehäuse 12 mit einem Display 14 auf, das als Touchscreen ausgebildet sein kann und in vorgegebenen Bereichen Bedienfelder aufweist. Bei dem Touchscreen kann es sich insbesondere um einen kapazitiven Touchscreen handeln, ohne dass hierdurch eine Einschränkung der Erfindung erfolgt.

Auch besteht die Möglichkeit, anstelle eines Touchscreens mit Bedienfeldern Tasten zu verwenden, die jeweils gleichfalls die Funktion eines Bedienfeldes ausüben. Andere gleichwertige Lösungen zum Initiieren von Aktionen sind gleichfalls möglich, ohne dass hierdurch die Erfindung eingeschränkt wird. Vielmehr sind diesbezügliche Lösungen von der Erfindung erfasst.

Im Ausführungsbeispiel weist das Display 14 neun Bedienfelder auf, die mit den Bezugszeichen 16, 18, 20, 22, 24, 26, 28, 30, 32 gekennzeichnet sind. Dabei werden über die Bedienfelder 16, 18, 20, 22, 24, 32 Aktionen bzw. Betriebsmodi des Rotationslasers 100 ausgelöst. Die Tasten 28, 30 sind für die Verwirklichung der erfindungsgemäßen Lehre dem Grunde nach nicht erforderlich, da diese Funktionen steuern, die unabhängig von der Neigung der Fernbedienung sind.

Die Fernbedienung 12 kann von einem Benutzer in eine Hand gelegt werden, die in natürlicher Position in etwa zur Horizontalen ausgerichtet ist, um sodann die Fernbedienung 12 um deren Längsachse 34 zu drehen (Pfeil 36), wobei in Abhängigkeit von der Drehung - auch Neigung genannt - Aktionen ausgelöst werden, wie nachstehend erläutert wird.

In dem Gehäuse 12 der Fernbedienung 10 ist eine Elektronik enthalten, um in Abhängigkeit von der Betätigung eines der Bedienfelder sowie der Neigung des Gehäuses 12 Signale zu generieren, die an den Rotationslaser 100 übertragen werden, um sodann gewünschte Aktionen bzw. Betriebsmodi durchzuführen. Um die Neigung des Gehäuses 12 zu ermitteln, befindet sich in dem Gehäuse zumindest ein entsprechend geeigneter Sensor, insbesondere Beschleunigungssensor, der die Richtung der Schwerkraft und damit die horizontale und vertikale Winkeländerung ermittelt. Dabei handelt es sich bei dem Sensor insbesondere um ein Mikrosystem (MEMS).

Die Verwendung eines Neigungssensors ist bevorzugt, da dieser zusätzlich einen Impulsbetrieb ermöglicht. Diese Vorteile ergeben sich bei einem Gyroskop nicht.

Nachdem der Rotationslaser 100 eingestellt und somit der Laserkopf 102 rotiert, kann z. B. die Rotationsgeschwindigkeit über die Fernbedienung 10 eingestellt werden. Hierzu ist es zunächst erforderlich, dass die Taste 16 gedrückt wird. Hierdurch allein wird jedoch eine Änderung der Rotationsgeschwindigkeit noch nicht ausgelöst. Vielmehr muss das Gehäuse 12 in einem Umfang gedreht werden, dass ein Schwellwert erreicht wird, also ein festgelegtes Verschwenken des Gehäuses erfolgt ist.

Bei dem Schwellwert sollte es sich um einen Absolutwert handeln, wobei die Neigung, d.h. die Drehung des Gehäuses 12 zum Erdschwerefeld berücksichtigt wird. So kann der Schwellwert z.B. dann erreicht sein, wenn das Gehäuse 12 in Bezug auf die Horizontale z.B. um 5° oder 10° zum Erdschwerefeld über eine Längsachse gedreht worden ist.

Ist der Schwellwert erreicht, wird entsprechend der Fig. 3 sodann über den Neigungssensor ermittelt, ob das Gehäuse 12 in oder entgegen dem Uhrzeigersinn gedreht, also geneigt ist. Ist eine positive Neigung, die z. B. einer Drehung entgegen dem Uhrzeigersinn entspricht, festgestellt, so erhöht sich die Rotationsgeschwindigkeit, wobei eine Änderung der Geschwindigkeit proportional zum eingenommenen Neigungswert erfolgt, wie die Fig. 3 vermittelt.

Ist demgegenüber eine Drehung des Gehäuses 12 entgegen dem Uhrzeigersinn vorgenommen worden, so wird die Ursprungsrotationsgeschwindigkeit des Laserkopfs 102 reduziert, wobei gleichfalls die Änderungsgeschwindigkeit proportional zum Neigungswert ist. Durch diese Maßnahmen kann sogar erreicht werden, dass der Rotationslaserkopf zum Stillstand gelangt, eine Voraussetzung, um den Punktmodus durchzuführen, wie nachstehend erläutert wird. Ist der gewünschte Geschwindigkeitswert erreicht, wird die Taste 16 losgelassen. Hierdurch wird sichergestellt, dass der eingestellte Wert beibehalten wird.

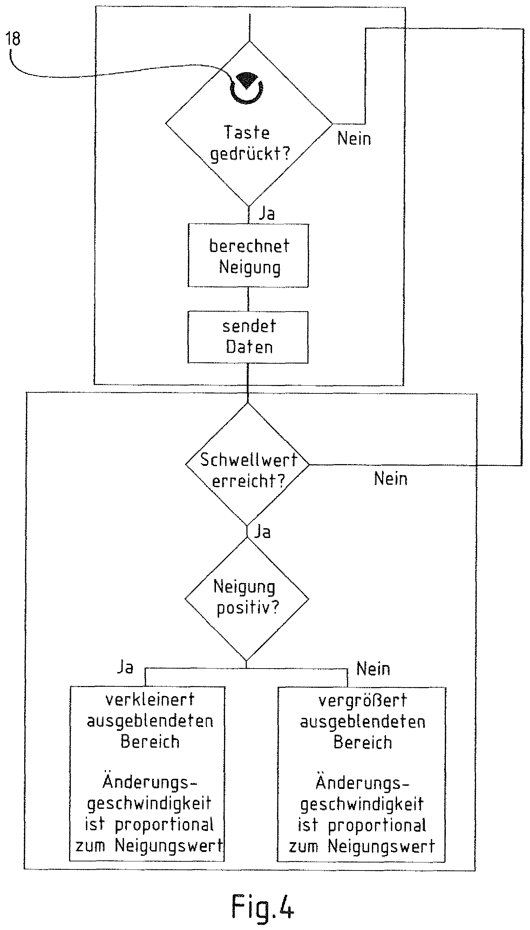

Der Fig. 4 ist ein Fließbild zu entnehmen, das die Möglichkeit der Durchführung eines Sektionsmodus zeigt. Sektionsmodus bedeutet, dass von dem rotierenden Laserlicht ein Bereich ausgeblendet wird, so dass nur über einen gewünschten Winkelbereich emittiertes Licht wahrnehmbar ist. Hierzu ist es erforderlich, zwei Tasten nacheinander zu betätigen, und zwar zunächst die Taste 18, und nachdem der durch die Taste 18 vorgegebene Betriebsmodus erreicht ist, die Taste 20, wobei jeweils zunächst der Schwellwert erreicht werden muss, damit sodann in Abhängigkeit von der Änderung des Parameters nach dem Erreichen des Schwellwertes das Ausmaß der Aktion verändert wird. Mit anderen Worten kann erst nach Erreichen des Schwellwertes die Aktion ausgelöst bzw. geändert werden - und zwar unabhängig davon, wie der Parameter geändert wird.

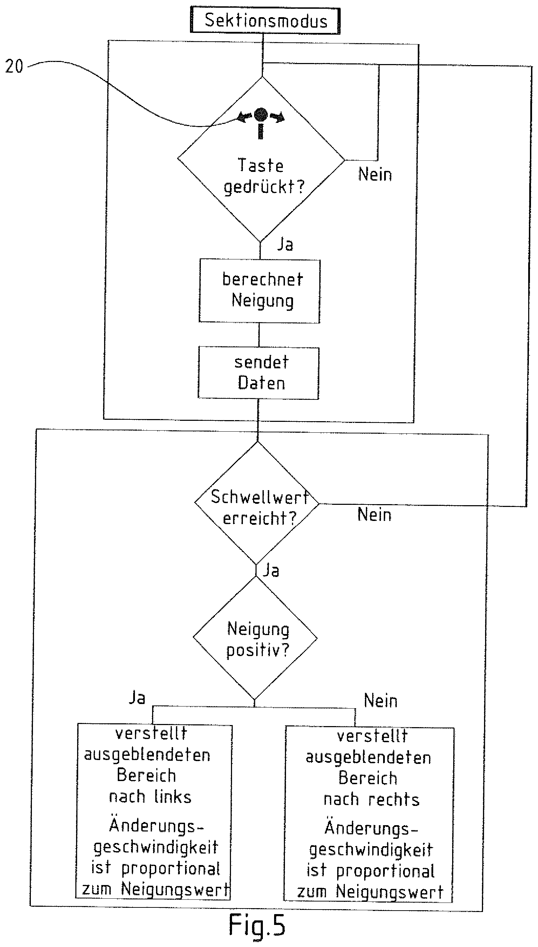

Durch Drücken der Taste 18 wird der Winkelbereich vorgegeben, in dem die von dem weiterhin rotierenden Laserkopf 102 emittierte Strahlung erfasst wird. Dieser Bereich wird als ausgeblendeter Bereich bezeichnet. Wird bei gedrückter Taste der Schwellwert erreicht, ist also das Gehäuse 12 im erforderlichen Umfang geneigt, wird mittels des Neigungssensors festgestellt, ob eine positive oder negative Neigung vorliegt. Wird eine positive Neigung festgestellt, so wird der ausgeblendete Bereich verkleinert, wird eine negative Neigung festgestellt, vergrößert, wobei in Abhängigkeit von dem tatsächlich vorliegenden oder einzunehmenden Neigungswert der Bereich verändert wird, und zwar proportional zum Neigungswert. Ausmaß des Neigungswinkels wird proportional in den Winkelbereich umgesetzt. Ist der gewünschte Winkelbereich eingestellt, so wird die Taste 20 gedrückt. Da sich der Winkelbereich im Bereich zu einem z. B. herstellerseitig festgelegten Bezugspunkt erstreckt, der z. B. gegenüber dem Bedienfeld des Rotationslasers liegen kann, muss die Möglichkeit bestehen, dass der ausgeblendete Bereich verstellt wird. Hierzu wird die Taste 20 gedrückt und nach Feststellung der notwendigen Neigung zur Auslösung der Aktion, also das Erreichen des Schwellwertes in zuvor beschriebener Weise, wird die Neigung ermittelt, ob es sich also um eine positive oder negative Neigung handelt. In Abhängigkeit von der Art der Neigung wird sodann der ausgeblendete Bereich nach links oder rechts verstellt, wobei die Änderungsgeschwindigkeit proportional zum Neigungswert ist. Dies ergibt sich - wie bei den anderen Figuren - selbsterklärend aus der Fig. 5.

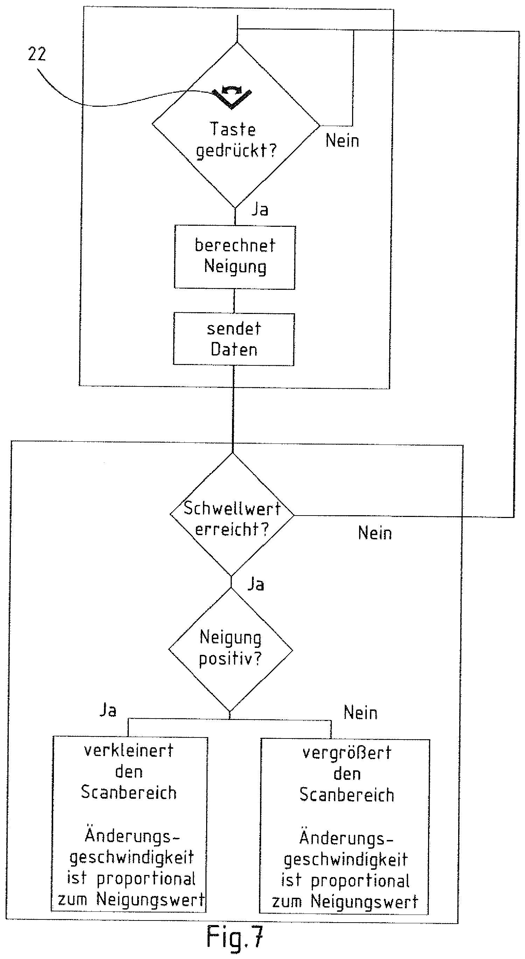

Um eine Scanfunktion auszulösen, bei der der Laserstrahl in einem vorgegebenen Winkelbereich hin und her bewegt wird, muss nach dem Ausführungsbeispiel zunächst die Taste 22 gedrückt werden. Bei gehaltener Taste 22 wird die Fernbedienung 10 im erforderlichen Umfang geneigt, um den Schwellwert zu erreichen. Sodann wird - wie bei den anderen Funktionen - überprüft, ob eine positive oder negative Neigung vorliegt, um sodann den Winkelbereich, innerhalb dem der Laserstrahl hin und her bewegt wird, zu vergrößern oder zu verkleinern, wie selbsterklärend der Fig. 7 zu entnehmen ist. Ist der gewünschte Winkelbereich erreicht, wird die Taste 22 gelöst und sodann die Taste 20 gedrückt. Entsprechend den Erläuterungen zu Fig. 5 wird sodann nach Überschreiten des Schwellwertes und Ermittlung des Neigungswerts, also des Ausmaßes der Neigung, der Scanbereich von einer Ausgangsposition ausgehend nach links oder rechts verstellt.

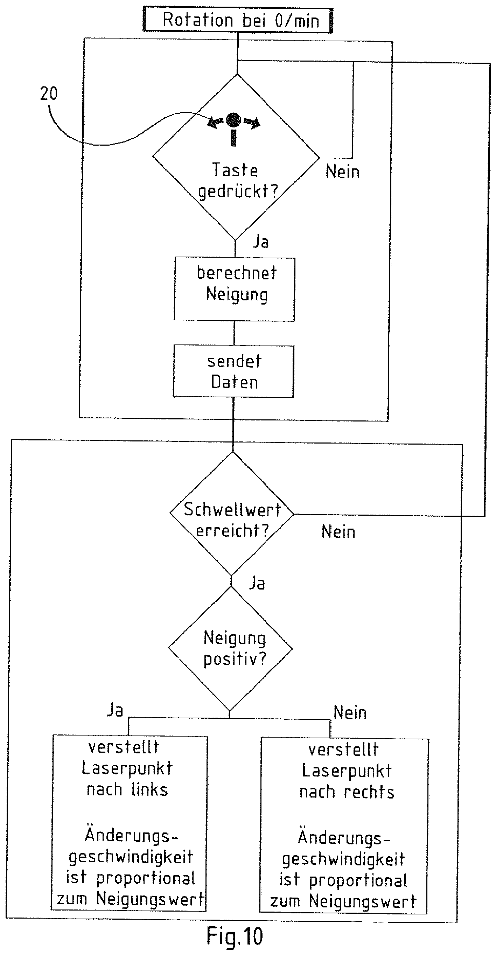

Der Fig. 10 ist ein Fließbild zu entnehmen, durch das der Punktmodus realisierbar ist, also ein Betriebsmodus, bei dem der Rotationskopf 102 des Rotationslasers 100 stillsteht und somit nur ein Punkt auf einer Begrenzung abgebildet wird. Hierzu ist es zunächst erforderlich, dass die Taste 16 gedrückt und entsprechend zuvor erfolgter Erläuterungen der Laserkopf 102 zum Stillstand gebracht wird. Nach Lösen der Taste 16 wird sodann die Taste bzw. das Bedienfeld 20 gedrückt, um - wie beim Scanmodus oder Sektionsmodus - den Punkt im gewünschten Umfang zu verstellen, d. h., dass nach Erreichen des Schwellwertes sodann die Neigung, also der Neigungswert der Fernbedienung 10 ermittelt wird, um sodann bei weiterer Neigung des Gehäuses 12, also Drehen um seine Längsachse - im oder entgegen dem Uhrzeigersinn - den Punkt nach links oder rechts zu verstellen, und zwar in Abhängigkeit von dem Ausmaß der Neigung.

Über die Tasten 24, 32 bzw. 26, 32 kann die Lasereinheit im gewünschten Umfang zur ursprünglichen X- und Y-Achse gekippt werden. Hierzu ist es zunächst erforderlich, dass bei einer Verstellung zur X-Achse die Tasten 24 und 32 gleichzeitig gedrückt werden. Hierdurch wird der Verstellmodus aktiviert. Sodann wird die Taste 32 gelöst und bei gehaltener Taste 24 festgestellt, ob die notwendige Neigung zur Auslösung der Aktion erreicht bzw. überschritten ist. Anschließend wird - wie zuvor erläutert - die Richtung der Neigung ermittelt, um sodann in Abhängigkeit von dem Neigungswert die X-Achse zu kippen. Entsprechendes gilt für die Y-Achse, indem zunächst die Tasten 26 und 32 gedrückt und nach Lösen der Taste 32 bei gehaltener Taste 26 das gewünschte Kippen der Y-Achse durchgeführt wird.

Ist die Erfindung anhand des Parameters "Neigung" der Fernbedienung 10 bzw. des Gehäuses 12 zur Auslösung von Aktionen, die auch als Synonym für Bedienmodi zu verstehen sind, beschrieben worden, so kann selbstverständlich auch ein anderer Parameter benutzt werden. Eine Neigung zur Vertikalen oder eine Bewegung des Gehäuses 12 selbst, also dessen Geschwindigkeit bzw. Beschleunigung beim Bewegen oder unterschiedliche Positionen des Gehäuses 12 können gleichfalls als Parameter benutzt werden, um zu überprüfen, ob eine gezielte Änderung der Position bzw. Lage des Gehäuses 12 erfolgt ist, die erforderlich ist, um mittels des zumindest einen Sensors zu überprüfen, ob ein Schwellwert erreicht ist und sodann in Abhängigkeit von der Änderung des Parameters Aktionen auszulösen, wie zuvor beschrieben.

## Patentansprüche

1. Verfahren zum Bedienen eines Baulasers in Form eines Linienlasers oder eines einen Laserkopf aufweisenden Rotationslasers (100) mittels einer Fernbedieneinheit (10), die mehrere Eingabefelder (16, 18, 20, 22, 24, 26, 32) zur Auslösung von Aktionen des Baulasers aufweist, wobei die Fernbedieneinheit zumindest einen Sensor zur Bestimmung einer Änderung eines Parameters der Fernbedieneinheit enthält und die Änderung des Parameters eine durch ein Eingabefeld ausgelöste Aktion zumindest beeinflusst,
**dadurch gekennzeichnet,**
**dass** die Aktion nach Betätigen des der Aktion zugeordneten Eingabefeldes (16, 18, 20, 22, 24, 26, 32) erst dann ausgelöst wird, wenn das Ausmaß der Änderung des zumindest einen Parameters der Fernbedieneinheit (10) einen Schwellwert zumindest erreicht und nach Erreichen des Schwellwerts in Abhängigkeit des Ausmaßes der Änderung des Parameters das Ausmaß der zumindest einen Aktion proportional verändert wird, wobei zumindest eine Aktion aus der Gruppe durchgeführt wird:
Scanmodus, wobei zur Auslösung des Scanmodus durch Betätigen des diesem zugeordneten Eingabefelds (22, 20) zuvor eine Aktion durchgeführt wird, mittels derer eine außerhalb des Rotationslasers (100) wahrzunehmende Emission der Laserstrahlung (104) über einen vom Ausmaß der Veränderung des Parameters abhängigen Winkel erfolgt,
Rotationsgeschwindigkeit des Laserkopfs, wobei durch Betätigen des der Aktion Rotationsgeschwindigkeit des Laserkopfs (102) zugeordneten Eingabefeldes (16) und nach Erreichen des Schwellwertes die Geschwindigkeit des rotierenden 23. September 2020- 56219 geänderte Ansprüche
Laserkopfs in Abhängigkeit vom Ausmaß der Änderung des Parameters verändert wird,
Punktmodus, wobei zur Auslösung des Punktmodus zunächst die die Rotationsgeschwindigkeit des Laserkopfs (102) bestimmende Aktion derart durchgeführt wird, dass der Laserkopf stillsteht, und sodann durch Betätigen des dem Punktmodus zugeordneten Eingabefelds (16, 20) und nach Erreichen des Schwellwertes in Abhängigkeit vom Ausmaß der Veränderung des Parameters die Rotationsposition des Laserkopfes verändert wird, Sektionsmodus, wobei zur Nutzung des Sektionsmodus, bei dem von außerhalb des Rotationslasers (100) wahrnehmbarem emittierten Licht ein Winkelbereich ausgeblendet wird, das dem Sektionsmodus zugeordnete Eingabefeld (18, 20) betätigt wird und nach Erreichen des Schwellwertes in Abhängigkeit vom Ausmaß der Veränderung des Parameters das Ausmaß des ausgeblendeten Bereichs verändert wird,
Neigung der von dem Laserstrahl aufgespannten Ebene.

2. Verfahren nach Anspruch 1,
**dadurch gekennzeichnet,**
**dass** eine Änderung des Ausmaßes der zumindest einen Aktion ausschließlich bei bleibender Betätigung des der Aktion zugeordneten Eingabefeldes (16, 18, 20, 22, 24, 26, 32) erfolgt.

3. Verfahren nach Anspruch 1,
**dadurch gekennzeichnet,**
**dass** als Parameter die Neigung der Fernbedieneinheit (10) bzw. deren Gehäuses (12) um ihre bzw. seine Längsachse (34) und/oder Querachse ausgewählt wird.

4. Verfahren nach zumindest einem der vorhergehenden Ansprüche,
**dadurch gekennzeichnet,**
**dass** nach Erreichen des gewünschten Ausmaßes der Aktion das Eingabefeld (16, 18, 20, 22, 24, 26, 32) nicht mehr betätigt wird und das durch das Ausmaß der Änderung des Parameters ausgelöste Ausmaß der Aktion beibehalten wird, insbesondere Rotationsgeschwindigkeit des Laserkopfes (102).

5. Verfahren nach zumindest einem der vorhergehenden Ansprüche,
**dadurch gekennzeichnet,**
**dass** nach erfolgter Auslösung und Beibehaltung einer Aktion und erneuter Betätigung des der Aktion zugeordneten Eingabefelds (16, 18, 20, 22, 24, 26, 32) die Aktion in ihrem Ausmaß unmittelbar verändert wird, wenn sich die Fernbedieneinheit (10) bereits in einer Position befindet, in der der Parameter den Schwellwert überschritten hat.

6. Verfahren nach zumindest einem der vorhergehenden Ansprüche,
**dadurch gekennzeichnet,**
**dass** der Schwellwert ein Absolutwert ist und insbesondere durch Neigung der von der Fernbedieneinheit (10) bzw. deren Gehäuse (12) aufgespannten Ebene zum Erdschwerefeld festgelegt ist.

## Claims

1. A method for operating a construction laser in the form of a linear laser or rotating laser (100) having a laser head, by means of a remote controller (10) , which has several input fields (16, 18, 20, 22, 24, 26, 32) for initiating at least one action of the construction laser, wherein the remote control unit contains at least one sensor for determining a change in a parameter of the remote control unit, and the change in the parameter at least influences the at least one action,
**characterized in that**,
following activation of the input field (16, 18, 20, 22, 24, 26, 32) assigned to the action, said action is initiated only when the degree of change in the at least one parameter of the remote control unit (10) has at least reached a threshold value, and once the threshold value has been reached, the degree of the at least one action is changed proportionally, dependent upon the degree of change in the parameter, wherein at least one action of the group is carried out:
a scan mode, wherein to initiate the scan mode by activating an input field (22, 20) assigned thereto an action is first carried out by means of which a laser beam radiation (104) that can be perceived outside of the rotating laser (100) is carried out over an angle which is dependent on the degree of change in the parameter,
rotational speed of the laser head, wherein by activating an input field (16) assigned to the action rotational speed of the laser head (102) and then reaching the threshold value, the speed of the rotating laser head is changed dependent upon the degree of change in the parameter,
point mode, wherein to initiate the point mode first the action that determines the rotating speed of the laser head (102) is implemented such that the laser head is stationary, and then by activating the input field (16, 20) assigned to the point mode and reaching the threshold value the rotational position of the laser head is changed dependent upon the degree of change in the parameter,
cross-sectional mode, wherein to use the cross-sectional mode, in which an angular region of emitted light which is perceptible from outside the rotating laser (100) is masked, the input field (18, 20) assigned to the cross-sectional mode is activated, and once the threshold value has been reached, the extent of the masked region is changed dependent upon the degree of change in the parameter,
tilt of the plane spanned by the rotating laser beam.

2. The method according to claim 1,
**characterized in that**
a change in the degree of the at least one action is made only when the input field (16, 18, 20, 22, 24, 26, 32) assigned to the action remains activated.

3. The method according to claim 1,
**characterized in that**
the tilt of the remote control unit (10) or the housing (12) thereof around its longitudinal axis (34) and/or transverse axis is selected as the parameter.

4. The method according to at least one of the preceding claims,
**characterized in that**,
once the desired degree of the action has been reached, the input field (16, 18, 20, 22, 24, 26, 32) is no longer activated, and the degree of the action initiated by the degree of the change in the parameter is maintained, in particular the rotational speed of the laser head (102).

5. The method according to at least one of the preceding claims,
**characterized in that**,
once an action has been initiated and maintained, when the input field (16, 18, 20, 22, 24, 26, 32) assigned to said action is reactivated the degree of the action is changed immediately if the remote control unit (10) is already in a position in which the parameter has exceeded the threshold value.

6. The method according to at least one of the preceding claims,
**characterized in that**
the threshold value is an absolute value and is defined particularly by tilting the plane spanned by the remote control unit (10) or the housing (12) thereof in relation to the earth's gravitational field.

## Revendications

1. Procédé de commande d'un laser de chantier sous forme de laser linéaire ou de laser rotatif (100) présentant une tête laser, au moyen d'une télécommande (10) qui présente plusieurs boutons de saisie (16, 18, 20, 22, 24, 26, 32) pour déclencher des actions du laser de chantier, sachant que la télécommande contient au moins un capteur pour déterminer un changement d'un paramètre de la télécommande et que le changement du paramètre influence tout au moins une action déclenchée par un bouton de saisie,
**caractérisé en ce**
**qu'**après actionnement du bouton de saisie (16, 18, 20, 22, 24, 26, 32) affecté à l'action, l'action est déclenchée uniquement si l'amplitude du changement dudit au moins un paramètre de la télécommande (10) atteint tout au moins une valeur seuil et qu'après que la valeur seuil a été atteinte, l'amplitude de ladite au moins une action est modifiée proportionnellement en fonction de l'amplitude du changement du paramètre, sachant qu'est exécutée au moins une action du groupe suivant ;
mode balayage, sachant que pour déclencher le mode balayage en actionnant le bouton de saisie (22, 20) affecté à celui-ci, est réalisée préalablement une action au moyen de laquelle une émission du rayon laser (104) à percevoir à l'extérieur du laser rotatif (100) a lieu selon un angle dépendant de l'amplitude du changement du paramètre,
vitesse de rotation de la tête laser, sachant qu'en actionnant le bouton de saisie (16) affecté à l'action Vitesse de rotation de la tête laser (102) et qu'après que la valeur seuil a été atteinte, la vitesse de la tête laser rotative est modifiée en fonction de l'amplitude du changement du paramètre,
mode point, sachant que pour déclencher le mode point, l'action déterminant la vitesse de rotation de la tête laser (102) est réalisée tout d'abord de sorte que la tête laser est immobile et qu'ensuite en actionnant le bouton de saisie (16, 20) affecté au mode point et une fois que la valeur seuil a été atteinte, la position de rotation de la tête laser est modifiée en fonction de l'amplitude du changement du paramètre,
mode section, sachant que pour l'utilisation du mode section au cours duquel est masquée une zone angulaire de la lumière émise, pouvant être perçue à l'extérieur du laser rotatif (100), le bouton de saisie (18, 20) affecté au mode section est actionné et une fois que la valeur seuil est atteinte, l'amplitude de la zone masquée est modifiée en fonction de l'amplitude du changement du paramètre,
inclinaison du plan sous-tendu par le rayon laser.

2. Procédé selon la revendication 1,
**caractérisé en ce**
**qu'**une modification de l'amplitude de ladite au moins une action a lieu uniquement en maintenant enfoncé le bouton de saisie (16, 18, 20, 22, 24, 26, 32) affecté à l'action.

3. Procédé selon la revendication 1,
**caractérisé en ce**
**qu'**est sélectionnée comme paramètre l'inclinaison de la télécommande (10) ou de son boîtier (12) par rapport à son axe longitudinal (34) et/ou axe transversal.

4. Procédé selon au moins une des revendications précédentes,
**caractérisé en ce**
**qu'**une fois qu'est atteinte l'amplitude souhaitée de l'action, le bouton de saisie (16, 18, 20, 22, 24, 26, 32) n'est plus actionné et l'amplitude de l'action, notamment la vitesse de rotation de la tête laser (102), activée par l'amplitude du changement du paramètre est maintenue.

5. Procédé selon au moins une des revendications précédentes,
**caractérisé en ce**
**qu'**après le déclenchement et le maintien d'une action et un nouvel actionnement du bouton de saisie (16, 18, 20, 22, 24, 26, 32) affecté à l'action, l'amplitude de l'action est modifiée directement si la télécommande (10) se trouve déjà dans une position dans laquelle le paramètre a dépassé la valeur seuil.

6. Procédé selon au moins une des revendications précédentes,
**caractérisé en ce**
**que** la valeur seuil est une valeur absolue et est fixée notamment par l'inclinaison du plan sous-tendu par la télécommande (10) ou son boîtier (12) par rapport au champ de pesanteur.
